# EUROPEAN PATENT APPLICATION

(11) **EP 4 332 270 A1**
(43) Date of publication of application: **06.03.2024**
(21) Application number: 22795809.7
(22) Date of filing: 26.04.2022
(51) Int. Cl.: C25B 1/01, B01J 31/22, C01C 1/04, C25B 1/24, C25B 9/00, C25B 9/19, C25B 11/042, C25B 11/043, C25B 13/04

(54) **APPARATUS FOR MANUFACTURING NITROGEN-CONTAINING COMPOUND AND METHOD FOR MANUFACTURING NITROGEN-CONTAINING COMPOUND**

(30) Priority: 27.04.2021 JP 2021075354
(71) Applicant: Idemitsu Kosan Co., Ltd, Tokyo 100-8321 (JP)
(72) Inventor: SHINOHARA, Yuki, Tokyo 100-8321 (JP); KAKINUMA, Takahiro, Tokyo 100-8321 (JP); SAKAKURA, Tatsuya, Tokyo 100-8321 (JP)
(74) Representative: Gille Hrabal Partnerschaftsgesellschaft mbB Patentanwälte
(86) International application number: PCT/JP2022/018931
(87) International publication number: WO 2022/230896

(57) **Abstract**

The present invention relates to: an apparatus 10 for producing a nitrogen-containing compound, including a cathode part 7 including a nitrogen-activation catalyst, an organic solvent, a reducing agent, and a cathode electrode 1, an anode part 8 including an anode electrode 2, and a diaphragm 3 positioned between the cathode part 7 and the anode part 8, in which at least one of the cathode part 7 and the anode part 8 includes a proton source, and voltage is applied between the cathode electrode 1 and the anode electrode 2 to synthesize a nitrogen-containing compound from nitrogen and protons originating from the proton source in the cathode part 7; and a method for producing a nitrogen-containing compound using the apparatus 10 for producing a nitrogen-containing compound.

## Description

### Technical Field

The present invention relates to an apparatus for producing a nitrogen-containing compound and a method for producing a nitrogen-containing compound.

### Background Art

Ammonia is an important chemical raw material used as a basic material for fertilizers and chemical products, and uses thereof for coal fired power generation co-combustion and as an energy carrier also draw attention recently.

Ammonia is conventionally produced by Haber-Bosch process. Haber-Bosch process is a method for producing ammonia by reacting nitrogen gas and hydrogen gas under the presence of an iron-based catalyst.

However, since Haber-Bosch process is a method for synthesizing ammonia at high temperature and under high pressure, energy consumption thereof is large, and a large apparatus made from a special material is required. Furthermore, there is also a problem of emitting a large amount of carbon dioxide, which is a greenhouse effect gas, when hydrogen gas is obtained from natural gas mainly containing methane (CH₄).

Therefore, development of a method for producing ammonia from nitrogen and water under mild reaction conditions is desired.

PTL 1, PTL 2, and NPL 1 each disclose a method for producing ammonia from nitrogen and hydrogen using a molybdenum complex catalyst. These documents indicate that production of ammonia at ambient temperature and under ambient pressure is possible.

### Citation List

### Patent Literature

PTL 1: JP 2013-159568 A
PTL 2: JP 2010-195703 A

### Non Patent Literature

NPL 1: Molybdenum-catalysed ammonia production with samarium diiodide and alcohols or water, Y Ashida, K. Arashiba, K. Nakajima, and Y Nishibayashi, Nature, 568, 536-540 (2019)

### Summary of Invention

### Technical Problem

The present inventors have studied a method for improving quantity of ammonia produced by the ammonia production methods described in PTL 1, PTL 2, and NPL 1.

The present invention has been made in view of the above circumstances and provides an apparatus for producing a nitrogen-containing compound and a method for producing a nitrogen-containing compound which are capable of improving production quantity of the nitrogen-containing compound.

### Solution to Problem

The present inventors have found that production quantity of a nitrogen-containing compound can be improved by, in an apparatus including: a cathode part including a nitrogen-activation catalyst, an organic solvent, a reducing agent, and a cathode electrode; an anode part including an anode electrode; and a diaphragm positioned between the cathode part and the anode part, applying voltage between the cathode electrode and the anode electrode and synthesizing, in the cathode part, the nitrogen-containing compound from nitrogen and protons originating from a proton source.

That is, according to the present invention, a nitrogen-containing compound production apparatus and a nitrogen-containing compound production method shown below are provided.

[1] An apparatus for producing a nitrogen-containing compound, including:
   a cathode part including a nitrogen-activation catalyst, an organic solvent, a reducing agent, and a cathode electrode;
   an anode part including an anode electrode; and
   a diaphragm positioned between the cathode part and the anode part, in which
   at least one of the cathode part and the anode part includes a proton source, and
   voltage is applied between the cathode electrode and the anode electrode to synthesize a nitrogen-containing compound from nitrogen and protons originating from the proton source in the cathode part.
[2] A method for producing the nitrogen-containing compound using the nitrogen-containing compound production apparatus according to item [1] above, the nitrogen-containing compound production method including:
   a step of applying voltage between the cathode electrode and the anode electrode to synthesize a nitrogen-containing compound from nitrogen and protons originating from the proton source in the cathode part.

### Advantageous Effects of Invention

According to the present invention, a nitrogen-containing compound production apparatus and a nitrogen-containing compound production method which are capable of improving production quantity of the nitrogen-containing compound can be provided.

### Brief Description of Drawings

Fig. 1 is a schematic diagram illustrating an example of a nitrogen-containing compound production apparatus according to the present disclosure.
Fig. 2 is a schematic diagram illustrating an example of the nitrogen-containing compound production apparatus according to the present disclosure.

### Description of Embodiments

### Nitrogen-containing compound production apparatus

A nitrogen-containing compound production apparatus of the present disclosure includes: a cathode part including a nitrogen-activation catalyst, an organic solvent, a reducing agent, and a cathode electrode; an anode part including an anode electrode; and a diaphragm positioned between the cathode part and the anode part. At least one of the cathode part and the anode part includes a proton source. The nitrogen-containing compound production apparatus of the present disclosure applies voltage between the cathode electrode and the anode electrode to synthesize a nitrogen-containing compound from nitrogen and protons originating from the proton source in the cathode part.

According to the nitrogen-containing compound production apparatus of the present disclosure, a nitrogen-containing compound is synthesized in the cathode part under the presence of the nitrogen-activation catalyst and the reducing agent, and, at the same time, the reducing agent oxidized during reaction to synthesize the nitrogen-containing compound can be reduced by an electrolytic method. When the reducing agent can be reduced by an electrolytic method, the reducing agent can be repeatedly used. Therefore, the reducing agent can be efficiently used, and production quantity of the nitrogen-containing compound is considered to be increased without using a large amount of the reducing agent.

The phrase "at the same time" herein means that synthesis of the nitrogen-containing compound and reduction of the oxidized reducing agent take place in the cathode part. It is preferable that a time interval between synthesis of the nitrogen-containing compound and reduction of the oxidized reducing agent be short.

In the nitrogen-containing compound production apparatus of the present disclosure, the nitrogen-containing compound is synthesized from nitrogen and the proton source under the presence of the nitrogen-activation catalyst and the reducing agent. Specifically, electron donation from the reducing agent and reaction to produce the nitrogen-containing compound are included.

The reaction to produce the nitrogen-containing compound proceeds under the presence of the nitrogen-activation catalyst, for example, proceeds through proton-coupled electron transfer (PCET) reaction coupled with electron donation from the reducing agent.

Reduction of the oxidized reducing agent by an electrolytic method proceeds as cathode reaction of the electrolytic method. Any reaction can be selected as anode reaction paired with the cathode reaction.

In the nitrogen-containing compound production apparatus of the present disclosure, in the case where the nitrogen-containing compound is ammonia, for example, ammonia is continuously synthesized through reaction shown in (1) to (3) below. Incidentally, electron donation from the reducing agent proceeding coupled with NH₃ production reaction, that is, reaction shown in (1) below is inclusively described in reaction shown in (2) below.
(1) Electron donation from reducing agent

   Red → Ox + e⁻
(2) NH₃ production reaction

   N₂ + 6Red + 6H⁺ → (Cat) → 2NH₃ + 6Ox
(3) Reduction reaction of reducing agent (cathode reaction)

   Ox + e⁻ → Red

Here, Red represents the reducing agent, Ox represents the oxidized reducing agent, and Cat represents the nitrogen-activation catalyst.

Protons in the reaction of (2) can be donated through the diaphragm from the proton source added to the inside of the cathode part or from the abode part.

In addition, in the nitrogen-containing compound production apparatus of the present disclosure, it is considered that ammonia (NH₃) is continuously synthesized through reaction shown in (A) to (E) below, when ammonia is synthesized using a molybdenum complex (hereinafter, also referred to as "Mocat") as the nitrogen-activation catalyst, samarium iodide (SmI₂) as the reducing agent, and water (H₂O) as the proton source, for example. Incidentally, reaction shown in (A) below proceeding coupled with NH₃ production reaction is inclusively described in reaction shown in (B) below.
(A) SmI₂ + H₂O → SmI₂(H₂O) → SmI₂(OH) + H⁺ + e⁻
(B) NH₃ production reaction

   N₂ + 6SmI₂ + 6H₂O → (proton-coupled electron transfer (PCET) reaction + Mocat) → 2NH₃ + 6SmI₂(OH)
(C) Samarium iodide reduction reaction (cathode reaction)

   SmI₂(OH) + e⁻ → SmI₂ + OH⁻
(D) Migration of OH⁻ from the cathode part to the anode part

   OH⁻ (cathode part) → (diaphragm) → OH⁻ (anode part)
(E) Anode reaction

   4OH⁻ → O₂ + 2H₂O + 4e⁻

In the reaction to synthesize the nitrogen-containing compound using the reducing agent, as in the reaction of (2) and (B) above, the reducing agent in an amount equal to or more than the amount of nitrogen is required; therefore, a large amount of the reducing agent is required in order to improve production quantity of the nitrogen-containing compound. On the other hand, in the nitrogen-containing compound production apparatus of the present disclosure, the reducing agent can be repeatedly used by reducing, by an electrolytic method, the reducing agent oxidized through reaction to synthesize the nitrogen-containing compound in the cathode part. Therefore, it is considered that the reducing agent can be efficiently used, and production quantity of the nitrogen-containing compound can be increased without using a large amount of the reducing agent.

In addition, in the nitrogen-containing compound production apparatus of the present disclosure, since water can be used as the proton source, the nitrogen-containing compound such as ammonia can be synthesized from nitrogen without passing through production of hydrogen gas. Therefore, a step of obtaining hydrogen gas from natural gas mainly containing methane (CH₄) can be omitted, and the problem of emitting a large amount of carbon dioxide, which is a greenhouse effect gas, hardly arises.

Furthermore, the nitrogen-containing compound production apparatus of the present disclosure is considered to be excellent in industrial productivity as the nitrogen-containing compound production apparatus of the present disclosure can advance reaction to synthesize the nitrogen-containing compound under mild reaction conditions, energy consumption is thus little, and a large apparatus made from a special material can be omitted.

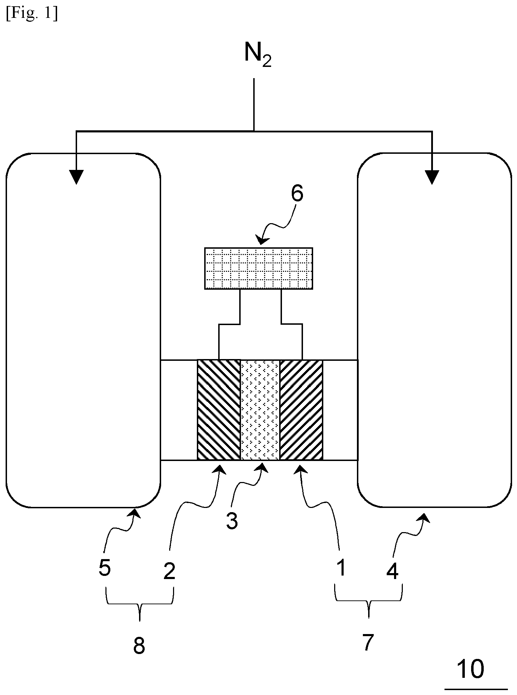

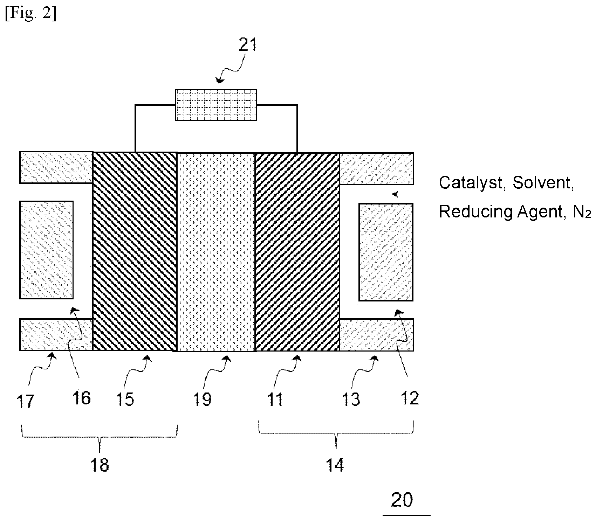

An electrolytic cell can be used as the nitrogen-containing compound production apparatus of the present disclosure, for example. Fig. 1 and Fig. 2 are schematic diagrams each illustrating an example of the nitrogen-containing compound production apparatus according to the present disclosure.

A nitrogen-containing compound production apparatus 10 illustrated in Fig. 1 is a so-called H-type cell and includes: a cathode part 7 including a cathode electrode 1 and a cathode chamber 4; an anode part 8 including an anode electrode 2 and an anode chamber 5; and a diaphragm 3 positioned between the cathode part 7 and the anode part 8. In addition, a power supply 6 capable of applying voltage to the cathode electrode 1 and the anode electrode 2 may be further provided.

A cathode liquid including a nitrogen-activation catalyst, an organic solvent, and a reducing agent is added to the cathode chamber 4. At least one of the cathode part 7 or the anode part 8 includes a proton source. That is, at least one of the cathode liquid or an anode liquid includes the proton source. In addition, a reference electrode may be placed inside the cathode chamber 4 or at a position connected to the diaphragm 3 via a salt bridge, and the potential of the cathode electrode 1 may be precisely controlled with reference to the reference electrode.

The nitrogen-activation catalyst reacts with nitrogen molecules supplied to the cathode chamber 4 and activates nitrogen molecules to form metal-nitrogen bonds. The cycle in which protons are supplied to the nitrogen from the proton source, electrons are supplied by the reducing agent, and metal is reduced is repeated to produce a nitrogen-containing compound. The oxidized reducing agent is reduced in the cathode part 7 and reused.

Here, in the present specification, the cathode liquid refers to a liquid used in the cathode part (cathode chamber) and is, for example, a liquid in which the nitrogen-activation catalyst and the reducing agent are added and the proton source, an additive, and the like are optionally added to a solvent; and the anode liquid refers to a liquid used in the anode part (anode chamber) and is, for example, a solvent or a liquid in which an additive, the proton source, and the like are added to a solvent.

A nitrogen-containing compound production apparatus 20 illustrated in Fig. 2 is a stack-type cell similar to a so-called PEM water electrolysis device and includes: a cathode part 14 including a cathode electrode 11, a cathode liquid flowing part 12, and a cathode current collector 13; an anode part 18 including an anode electrode 15, an anode liquid flowing part 16, and an anode current collector 17; and a diaphragm 19 positioned between the cathode part 14 and the anode part 18. In addition, a power supply 21 capable of applying voltage to the cathode electrode 11 and the anode electrode 15 may be further provided.

The cathode liquid including the nitrogen-activation catalyst, the organic solvent, and the reducing agent flows through the cathode liquid flowing part 12 and is supplied to the cathode electrode 11.

At least one of the cathode part 14 and the anode part 18 includes a proton source. That is, at least one of the cathode liquid and an anode liquid includes the proton source. In addition, a reference electrode may be placed inside the cathode liquid flowing part 12 or at a position connected to the diaphragm 19 via a salt bridge, and the potential of the cathode electrode 11 may be precisely controlled with reference to the reference electrode.

The nitrogen-activation catalyst reacts with nitrogen molecules supplied into the cathode liquid and activates nitrogen molecules to form metal-nitrogen bonds. The cycle in which protons are supplied to the nitrogen from the proton source, electrons are supplied by the reducing agent, and metal is reduced is repeated to produce a nitrogen-containing compound. The oxidized reducing agent is reduced in the cathode part 14 and reused.

The proton source in the nitrogen-containing compound production apparatus of the present disclosure includes water, alcohols such as methanol, ethanol, propanol, butanol, trifluoroethanol, phenol, and ethylene glycol, hydrogenated lutidine, hydrogenated picoline, hydrogenated collidine, and the like, and water is preferable. Here, the proton source may be included in at least one of the cathode liquid and the anode liquid as an anode solvent and/or a cathode solvent described later, or may be included in at least one of the cathode liquid and the anode liquid as an electric conductivity improving additive described later.

In addition, examples of the nitrogen-containing compound in the nitrogen-containing compound production apparatus of the present disclosure include ammonia, silylamine, and hydrazine, and ammonia is preferable.

### Nitrogen-activation catalyst

Although the nitrogen-activation catalyst of the present disclosure is not particularly limited as long as it is a catalyst capable of activating nitrogen, examples thereof include a metal complex activating nitrogen, an organic metal complex capable of breaking nitrogen triple bonds is preferable, and an organic metal complex capable of breaking nitrogen triple bonds and soluble in an organic solvent is more preferable. Here, the phrase "soluble in an organic solvent" means that when the nitrogen-activation catalyst in an amount achieving a concentration of 0.1 mmol/L is mixed with an organic solvent, dissolution can be visually observed, for example.

Examples of the central metal of the metal complex activating nitrogen include Ti, V, Mo, Fe, Mn, Co, Pt, Ir, and W, and Mo is preferable.

Examples of a ligand of the metal complex activating nitrogen include a halide ion and a tertiary phosphine, a combination of a pincer ligand (that is, a ligand to which three coordinating atoms bind from three directions on the same plane including the central metal) and a halide ion is preferable, a combination of a phosphorus-carbon-phosphorus (PCP)-type pincer ligand or a phosphorus-nitrogen-phosphorus (PNP)-type pincer ligand and a halide ion is more preferable, and a combination of a PCP-type pincer ligand and a halide ion is still more preferable.

A complex meeting solubility in an organic solvent and reactivity with the reducing agent can be suitable used as the metal complex activating nitrogen.

Among them, as the metal complex activating nitrogen, a molybdenum complex in which the central metal is Mo is preferable, a molybdenum complex having, as a ligand, a pincer ligand and a halide ion is more preferable, a molybdenum complex having, as a ligand, a PCP-type pincer ligand or a PNP-type pincer ligand and a halide ion is still more preferable, and a molybdenum complex having, as a ligand, a PCP-type pincer ligand and a halide ion is further preferable.

Examples of the molybdenum complex having, as a ligand, a PNP-type pincer ligand and a halide ion include molybdenum complexes represented by formulae (1), (5), or (6) below. In addition, examples of the molybdenum complex having, as a ligand, a PCP-type pincer ligand and a halide ion include molybdenum complexes represented by formulae (2) or (3) below. In addition, other molybdenum complexes include a molybdenum complex represented by formula (4) below.

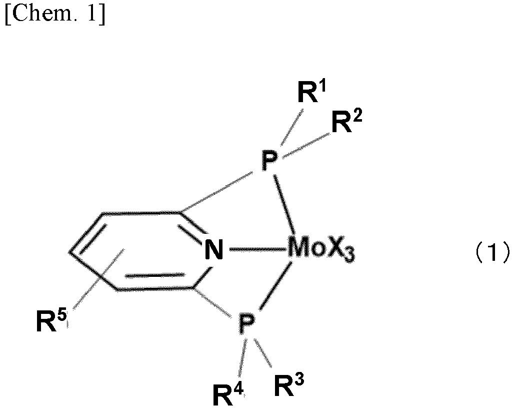

In formula (1) above, R¹ to R⁴ are each independently represent hydrogen or a linear, cyclic, or branched hydrocarbon group having 1 to 14 carbon atoms; R⁵ represents hydrogen or a linear, cyclic, or branched hydrocarbon group having 1 to 14 carbon atoms and substituting hydrogen in the ring; X's each independently represent a halide ion selected from the group constituting of fluorine, chlorine, bromine, and iodine.

Here, R¹ and R² and/or R³ and R⁴ may bind to each other to form a ring, PR¹R² and PR³R⁴ may be identical to or different from each other, and all of R¹ to R⁴ may be identical to one another or R¹ to R⁴ may be at least partially different.

The "linear, cyclic, or branched hydrocarbon group having 1 to 14 carbon atoms" for R¹ to R⁵ can be selected from the group consisting of an alkyl group having 1 to 6 carbon atoms, an alkenyl group having 2 to 6 carbon atoms, an alkynyl group having 2 to 6 carbon atoms, a cycloalkyl group having 3 to 6 carbon atoms, a cycloalkenyl group having 3 to 6 carbon atoms, a cycloalkynyl group having 3 to 6 carbon atoms, and an aryl group having 6 to 14 carbon atoms, for example. Among them, as R¹ to R⁴, an alkyl group having 1 to 6 carbon atoms is preferable, and an alkyl group having 1 to 4 carbon atoms is more preferable. In addition, as R¹ to R⁴, a butyl group is preferable, and a tert-butyl group is more preferable.

In addition, when two or three R⁵'s are present, these R⁵'s may bind to each other to form a ring. In addition, when two or three R⁵'s are present, all R⁵'s may be identical to one another, or R⁵'s may be at least partially different.

X is preferably bromine, chlorine, or iodine and more preferably chlorine or iodine.

Here, X₃ in the formula means that three X's bind to Mo.

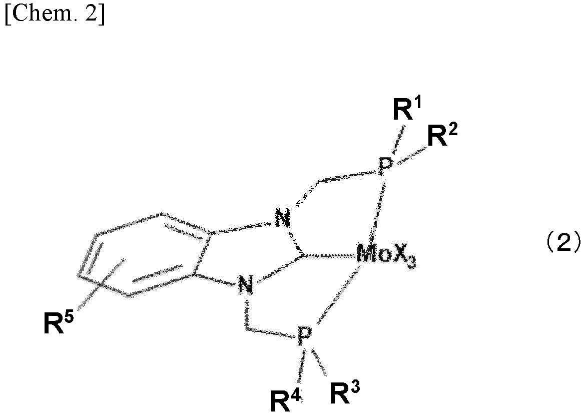

In formula (2) above, R¹ to R⁵ and X are the same as those in formula (1) above.

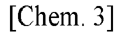

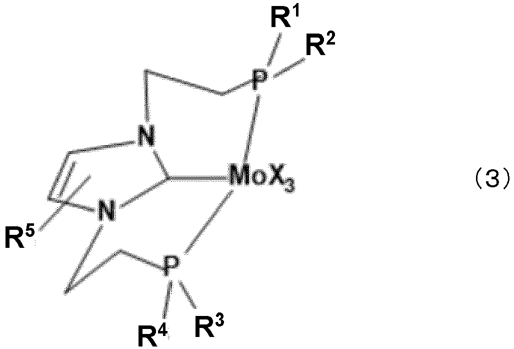

In formula (3) above, R¹ to R⁵ and X are the same as those in formula (1) above.

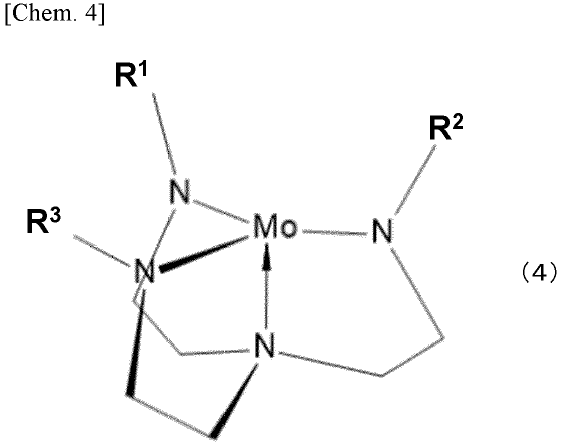

In formula (4) above, R¹ to R³ are the same as those in formula (1) above.

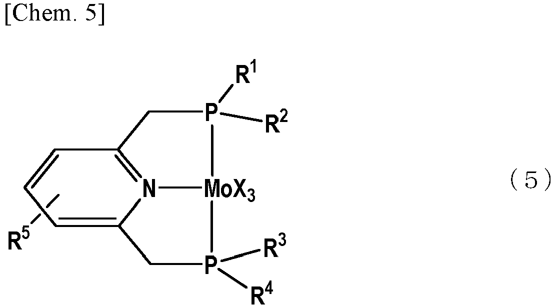

In formula (5) above, R¹ to R⁵ and X are the same as those in formula (1) above.

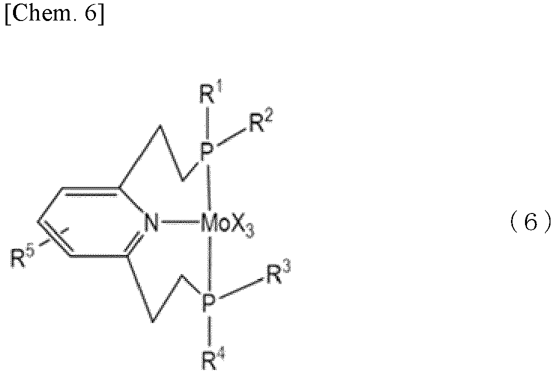

In formula (6) above, R¹ to R⁵ and X are the same as those in formula (1) above.

The concentration of the nitrogen-activation catalyst in the cathode liquid is not particularly limited but is, for example, 0.1 mmol/L or more and 1 mol/L or less from the viewpoint of accelerating reaction to synthesize the nitrogen-containing compound.

### Reducing agent

Although the reducing agent of the present disclosure is not particularly limited as long as it is a compound capable of reducing the nitrogen-activation catalyst, a compound that has a redox potential equal to or negative than the open circuit potential of the nitrogen-activation catalyst and is soluble in an organic solvent is preferable from the viewpoint of accelerating reaction to synthesize the nitrogen-containing compound. In addition, from the viewpoint of accelerating reaction to synthesize the nitrogen-containing compound, it is preferable that the reduction potential of the reducing agent of the present disclosure be on the more positive side than competitive reaction thereof, that is, reduction reaction of the proton source or protons, and it is more preferable that the reduction potential of the reducing agent of the present disclosure be on the more positive side than -2.0 VvsSCE.

The redox potential of the reducing agent can be obtained by converting, into a potential based on the saturated calomel electrode (SCE), a value measured by a cyclic voltammetry (CV) method using, for example, a Ag/Ag⁺ electrode as a reference electrode; more specifically, the redox potential of the reducing agent can be measured by a method described in examples described later.

In addition, the phrase "soluble in an organic solvent" means that when the reducing agent in an amount achieving a concentration of 0.1 mmol/L is mixed with an organic solvent, dissolution can be visually observed, for example.

Examples of the reducing agent of the present disclosure include at least one selected from the group consisting of samarium iodide, decamethylcobaltocene, cobaltocene, and decamethylchromocene. Among them, at least one selected from the group consisting of samarium iodide and decamethylcobaltocene is preferable, and samarium iodide is more preferable. One kind of the reducing agent may be used alone, or two or more kinds thereof may be used in combination.

The concentration of the reducing agent in the cathode liquid is not particularly limited but is, for example, 0.1 mmol/L or more and 1 mol/L or less from the viewpoint of accelerating reaction to synthesize the nitrogen-containing compound.

### Cathode electrode

In the cathode part, reduction reaction (for example, 2H₂O + 2e⁻ → H₂ + 2OH⁻) of the proton source added to the cathode part and reduction reaction (for example, 2H⁺ + 2e⁻ → H₂) of protons supplied to the cathode part from the anode part through the diaphragm occur as competitive reaction in addition to reduction reaction of the reducing agent as in (3) or (C) above.

Therefore, it is preferable that a cathode electrode with high overpotential with respect to competitive reaction be selected so that reduction reaction of the reducing agent as in (3) or (C) above preferentially occurs.

A metal with high hydrogen production overpotential is preferably selected as the cathode electrode; specifically, it is preferable that the equation logic = -6 or less be satisfied with respect to the exchange current density of hydrogen production reaction. Specifically, an electrode including at least one selected from titanium, vanadium, manganese, iron, cobalt, nickel, copper, zinc, gallium, niobium, molybdenum, silver, indium, tin, lead, bismuth, aluminum, and carbon is preferable as the cathode electrode.

In addition, examples of the cathode electrode include a titanium electrode, a vanadium electrode, a manganese electrode, an iron electrode, a cobalt electrode, a nickel electrode, a copper electrode, a zinc electrode, a gallium electrode, a niobium electrode, a molybdenum electrode, a silver electrode, an indium electrode, a tin electrode, a lead electrode, a bismuth electrode, an aluminum electrode, a carbon electrode, and an electrode of a combination thereof. Among them, a titanium electrode is preferable from the viewpoint of further accelerating reaction in the cathode part.

### Anode electrode

An anode electrode with low reaction overpotential is preferably used as the anode electrode from the viewpoint of accelerating reaction on the anode electrode. For example, when reaction of (E) above is selected as reaction on the anode electrode, an anode electrode with low oxygen production overpotential is preferably used from the viewpoint of accelerating reaction of (E) on the anode electrode.

An electrode including at least one selected from rhodium, palladium, iridium, ruthenium, platinum, gold, titanium, nickel, cobalt, manganese, copper, zinc, tin, iron, lanthanum, strontium, chromium, calcium, barium, cerium, bismuth, tungsten, and carbon is preferable as the anode electrode.

In addition, examples of the anode electrode include a rhodium electrode, a palladium electrode, an iridium electrode, a ruthenium electrode, a platinum electrode, a gold electrode, a titanium electrode, a nickel electrode, a cobalt electrode, a manganese electrode, a copper electrode, a zinc electrode, a tin electrode, an iron electrode, a lanthanum electrode, a strontium electrode, a chromium electrode, a calcium electrode, a barium electrode, a cerium electrode, a bismuth electrode, a tungsten electrode, a carbon electrode, and an electrode of a combination thereof. Among them, a nickel electrode is preferable from the viewpoint of further accelerating reaction in the anode part.

### Diaphragm

The diaphragm has a function to prevent the catalyst and the reducing agent from moving from the cathode part to the anode part. In addition, according to the types of the reducing agent, the proton source, and the anode reaction used, the diaphragm has a function to move protons from the anode part to the cathode part, or to move OH⁻ ions from the cathode part to the anode part. In addition, when reaction in the cathode part occurs in an organic solvent, a diaphragm chemically and/or physically stable even in the organic solvent, that is, a diaphragm that is hardly dissolved and/or hardly swells even in the organic solvent is preferably selected.

Examples of the diaphragm include an inorganic membrane such as a glass filter and a zeolite membrane; and an ion exchange membrane such as an anion exchange membrane, a cation exchange membrane, and a bipolar membrane. Among them, an anion exchange membrane or an inorganic membrane is preferable, and an anion exchange membrane is more preferable. One kind of the diaphragm may be used alone, or two or more kinds thereof may be used in combination.

A thickness of the diaphragm is not particularly limited but is, for example, 10 µm or more and 5000 µm or less from the viewpoints of ion conductivity and chemical and/or physical stability, and when an ion exchange membrane is used as the diaphragm, a lower limit of the thickness of the diaphragm is preferably 60 µm or more, more preferably 65 µm or more, and still more preferably 70 µm or more from the viewpoint of suppressing dissolution of the membrane.

### Electric conductivity improving additive

An additive capable of improving electric conductivity without impairing reaction to synthesize the nitrogen-containing compound may be added to the cathode liquid and/or the anode liquid from the viewpoint of accelerating reaction to synthesize the nitrogen-containing compound.

Examples of such an electric conductivity improving additive include a metal halide salt such as lithium iodide, sodium iodide, potassium iodide, lithium chloride, sodium chloride, and potassium chloride; a compound which is a complex of a cation and an anion such as dimethylanilinium borate, tetrabutylammonium hexafluorophosphate, ammonium hexafluorophosphate, [LutH]OTf (hydrogenated lutidine trifluoromethanesulphonate), [ColH]OTf (hydrogenated collidine trifluoromethanesulphonate), [PicH]OTf (hydrogenated picoline trifluoromethanesulphonate), 1-hexyl-3-methylimidazolium bis(trifluoromethylsulfonyl)imide, and 1-butyl-3-methylimidazolium bis(trifluoromethylsulfonyl)amide (ion liquid); and a basic compound such as sodium hydroxide and potassium hydroxide. One kind of the additive may be used alone, or two or more kinds thereof may be used in combination.

In addition, when an organic solvent is used as the solvent, water may be used as the additive.

A concentration of the electric conductivity improving additive in the cathode liquid or the anode liquid is not particularly limited but is, for example, 0.1 mmol/L or more and 3 mol/L or less from the viewpoint of accelerating reaction to synthesize the nitrogen-containing compound.

### Cathode solvent

The organic solvent used in the cathode part is preferably an organic solvent that is capable of dissolving the salt for improving activity and/or electric conductivity of the nitrogen-activation catalyst and has a stable potential window even during applying voltage. For example, an organic solvent having a solubility parameter of 20 (cal/cm³)^{1/2} or less is desirably selected. The "solubility parameter (SP value)" herein is a value introduced by Hildebrand and defined by regular solution theory.

Examples of such an organic solvent include ethers such as dibutyl ether, diethyl ether, dimethoxyethane, 1,4-dioxane, and tetrahydrofuran; alcohols such as methanol, ethanol, propanol, isopropanol, butanol, trifluoroethanol, phenol, and ethyleneglycol; nitriles such as acetonitrile; alkanes such as n-hexane; and carbonates such as ethylene carbonate, propylene carbonate, butylene carbonate, dimethyl carbonate, diethyl carbonate, ethyl carbonate, and methyl propyl carbonate. Among them, tetrahydrofuran and/or dimethoxyethane are preferable, and dimethoxyethane is more preferable from the viewpoint of ellectrochemical stability. One kind of the organic solvent may be used alone, or two or more kinds thereof may be used in combination.

### Anode solvent

Examples of a solvent used in the anode part include water and an organic solvent including water. The organic solvent used in the anode part includes those same as the organic solvents listed for the cathode solvent.

### Operation conditions

In the nitrogen-containing compound production apparatus of the present disclosure, it is preferable that a voltage be selected such that competitive reaction and reduction precipitation of the reducing agent and the proton source are suppressed while maximizing the current value at which the reducing agent is electrochemically reduced.

Specifically, the voltage is more preferably 5.0 V or less, still more preferably 4.5 V or less, further preferably 4.0 V or less, and still further preferably 3.5 V or less.

In the nitrogen-containing compound production apparatus of the present disclosure, it is preferable that the potential of the cathode electrode be selected such that competitive reaction and reduction precipitation of the reducing agent and the proton source are suppressed while maximizing the current value at which the reducing agent is electrochemically reduced.

Specifically, the nitrogen-containing compound production apparatus of the present disclosure may include a reference electrode and is preferably operated such that the potential of the cathode electrode defined on the basis of the reference electrode is on the more positive side than reduction reaction of the proton source or protons, more preferably on the more positive side than -2.3 VvsSCE, still more preferably on the more positive side than -2.0 VvsSCE, and further preferably on the more positive side than -1.8 VvsSCE.

According to the nitrogen-containing compound production apparatus of the present disclosure, production of the nitrogen-containing compound can be advanced under relatively mild conditions, and production of the nitrogen-containing compound can be advanced by carrying out operation within the ranges of -80°C or more and 100°C or less and 0.10 MPa or more and 0.20 MPa or less, for example. The temperature is preferably -60°C or more and 70°C or less and more preferably -40°C or more and 60°C or less.

### Nitrogen-containing compound production method

A nitrogen-containing compound production method of the present disclosure is a nitrogen-containing compound production method using the nitrogen-containing compound production apparatus of the present disclosure, and includes a step of applying voltage between the cathode electrode and the anode electrode to synthesize a nitrogen-containing compound from nitrogen and protons originating from the proton source in the cathode part.

According to the nitrogen-containing compound production method of the present disclosure, the same effect as the nitrogen-containing compound production apparatus of the present disclosure can be provided.

Preferable aspects of each element constituting the nitrogen-containing compound production apparatus in the nitrogen-containing compound production method of the present disclosure and preferable operation of the nitrogen-containing compound production apparatus are same as those for the nitrogen-containing compound production apparatus of the present disclosure described above.

### Examples

Hereinafter, the present disclosure will be described in further detail with examples, but the present disclosure is not limited to the examples.

### Example 1

An electrolytic cell (made of Pyrex glass, H-type cell) illustrated in Fig. 1 was used. An anion exchange membrane (ASE, manufactured by ASTOM Corporation, product name: "NEOSEPTA ASE-A-5142 membrane," thickness: 150 µm) was used as a diaphragm of the cell, a nickel (Ni) electrode was used as an anode electrode, and a titanium (Ti) electrode was used as a cathode electrode.

Into an anode chamber of the H-type cell, was put 40 mL of a 0.2 mol/L deoxidized potassium hydroxide (KOH) aqueous solution, and 0.011 mmol of the molybdenum complex represented by formula (A) below as a nitrogen-activation catalyst, 0.06 mmol of samarium iodide (SmI₂, with a reduction potential of -0.70 VvsSCE) as a reducing agent, 40 mL of dehydrated and deoxidized dimethoxyethane (DME) as a solvent, and 500 mg of tetrabutylammonium hexafluorophosphate (Bu₄NPF₆) and 1600 mg of sodium iodide as an electric conductivity improving additive were put into a cathode chamber.

Thereafter, a potential of -1.7 V based on a SCE reference electrode was applied to the cathode electrode, followed by energization for two hours to conduct ammonia synthesis reaction. Subsequently, 10 mL of 0.02 mol/L sulfuric acid was added to the cathode chamber to terminate reaction, and produced ammonia was quantified by ion chromatography.

The produced amount of ammonia was 0.025 mmol. Since the produced amount of ammonia derived from chemical reaction calculated from the amount of samarium iodide used was 0.009 mmol, 0.016 mmol of ammonia was produced through electrochemical reaction.

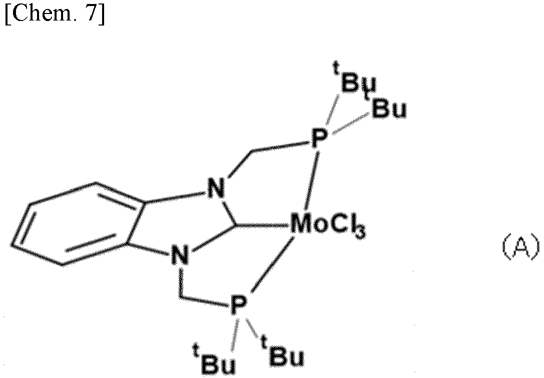

Here, the molybdenum complex represented by formula (A) above was produced according to the description of a non patent literature, Y Ashida, Y Nishibayashi et. al., "Molybdenum-catalysed ammonia production with samarium diiodide and alcohols or water," Nature, 568, 536 (2019).

The symbol ^{t}Bu represents a tert-butyl group.

The redox potential of the reducing agent was measured by a cyclic voltammetry (CV) method. The CV was measured with the following device and conditions. The redox potential of the obtained reducing agent was converted into a SCE-based potential from a Ag/Ag⁺-based potential.

Potentiostat: manufactured by TOHO Technical Research Co., Ltd., product name "8 CHANNEL POTENTIOSTAT/GALVANOSTAT MODEL PS-08"
Working electrode: glassy carbon electrode (manufactured by BAS Inc., OD: 6 mm, ID: 3 mm)
Counter electrode: platinum electrode (manufactured by BAS Inc., length: 5 cm, electrode part diameter: 0.5 mm)
Reference electrode: non-aqueous solvent-based reference electrode (manufactured by BAS Inc., Ag/Ag⁺, RE-7)

### Measurement conditions

Supporting electrolyte: 0.1 M ammonium tetrabutylhexafluorophosphate
Sweeping velocity: 100 mV/second
Solvent: dimethoxyethane
Measurement was carried out in a glove box substituted by nitrogen gas.
Reducing agent concentration: 10 mM

The open circuit potential of the nitrogen-activation catalyst was measured by a open circuit potential (OCP) measurement method. The OCP was measured with the following device and conditions. The obtained open circuit potential of the nitrogen-activation catalyst was converted into a SCE-based potential from a Ag/Ag⁺-based potential.

Potentiostat: manufactured by TOHO Technical Research Co., Ltd., product name "8 CHANNEL POTENTIOSTAT/GALVANOSTAT MODEL PS-08"
Working electrode: glassy carbon electrode (manufactured by BAS Inc., OD: 6 mm, ID: 3 mm)
Counter electrode: platinum electrode (manufactured by BAS Inc., length: 5 cm, electrode part diameter: 0.5 mm)
Reference electrode: non-aqueous solvent-based reference electrode (manufactured by BAS Inc., Ag/Ag⁺, RE-7)

### Measurement conditions

Supporting electrolyte: 0.1 M ammonium tetrabutylhexafluorophosphate
Solvent: dimethoxyethane
Measurement was carried out in a glove box substituted by nitrogen gas.
Nitrogen-activation catalyst concentration: 1 mM

### Example 2

Ammonia was produced in the same manner as Example 1 except that "0.011 mmol of the molybdenum complex represented by formula (A)" put into the cathode chamber was changed to "0.009 mmol of the molybdenum complex represented by formula (A)," and "1600 mg of sodium iodide" was changed to "800 mg of sodium iodide." The produced amount of ammonia was 0.022 mmol. Since the produced amount of ammonia derived from chemical reaction calculated from the amount of samarium iodide used was 0.011 mmol, 0.011 mmol of ammonia was produced through electrochemical reaction.

### Comparative Example 1

Ammonia was produced in the same manner as Example 1 except that no voltage was applied between the anode electrode and the cathode electrode of the electrolytic cell. The produced amount of ammonia was 0.009 mmol and was equal to the produced amount of ammonia derived from chemical reaction calculated from the amount of samarium iodide.

### Example 3

Ammonia was produced in the same manner as Example 1 except that "application of a potential of -1.7 V based on the SCE reference electrode to the cathode electrode" was changed to "application of a potential of -2.5 V based on the SCE reference electrode to the cathode electrode." The produced amount of ammonia was 0.023 mmol. Since the produced amount of ammonia derived from chemical reaction calculated from the amount of samarium iodide used was 0.009 mmol, 0.014 mmol of ammonia was produced through electrochemical reaction. Generation of bubbles from the cathode electrode was observed, and production of hydrogen was confirmed.

### Comparative Example 2

Ammonia was produced in the same manner as Example 3 except that no samarium iodide was added to the cathode chamber. The produced amount of ammonia was 0.002 mmol.

**Table 1**

| | Cathode part | | | | | Anode part | | | Diaphragm | Cathode potential [V vs SCE] | NH₃ production amount [mmol] |
|---|---|---|---|---|---|---|---|---|---|---|---|
| | Catalyst | Reducing agent | Electrode | Solvent | Additive | Electrode | Solvent | Additive | | | |
| Example 1 | Mo complex (A) (0.011 mmol) | SmI₂ (0.06 mmol) | Ti | DME | Bu₄NPF₆ (500 mg) Nal (1600 mg) | Ni | Water | 0.2M KOH | ASE | -1.7 | 0.025 |
| Example 2 | Mo complex (A) (0.009 mmol) | SmI₂ (0.06 mmol) | Ti | DME | Bu₄NPF₆ (500 mg) NaI (800 mg) | Ni | Water | 0.2M KOH | ASE | -1.7 | 0.022 |
| Comparative Example 1 | Mo complex (A) (0.011 mmol) | SmI₂ (0.06 mmol) | Ti | DME | Bu₄NPF₆ (500 mg) NaI (1600 mg) | Ni | Water | 0.2M KOH | ASE | - | 0.009 |
| Example 3 | Mo complex (A) (0.011 mmol) | SmI₂ (0.06 mmol) | Ti | DME | Bu₄NPF₆ (500 mg) NaI (1600 mg) | Ni | Water | 0.2M KOH | ASE | -2.5 | 0.023 |
| Comparative Example 2 | Mo complex (A) (0.011 mmol) | - | Ti | DME | Bu₄NPF₆ (500 mg) NaI (1600 mg) | Ni | Water | 0.2M KOH | ASE | -2.5 | 0.002 |

### Example 4

Ammonia was produced in the same manner as Example 1 except that "0.011 mmol of the molybdenum complex represented by formula (A)" put into the cathode chamber was changed to "0.010 mmol of the molybdenum complex represented by formula (A)," and "500 mg of tetrabutylammonium hexafluorophosphate (Bu₄NPF₆)" put into the cathode chamber was changed to "600 mg of dimethylanilinium tetrakispentafluorophenylborate (DMAB)." The produced amount of ammonia was 0.018 mmol. Since the produced amount of ammonia derived from chemical reaction calculated from the amount of samarium iodide used was 0.010 mmol, 0.008 mmol of ammonia was produced through electrochemical reaction.

### Example 5

Ammonia was produced in the same manner as Example 4 except that "0.010 mmol of the molybdenum complex represented by formula (A)" put into the cathode chamber was changed to "0.007 mmol of the molybdenum complex represented by formula (A)," "600 mg of DMAB" put into the cathode chamber was changed to "2900 mg of DMAB," and "0.06 mmol of samarium iodide" was changed to "0.12 mmol of samarium iodide." The produced amount of ammonia was 0.047 mmol. Since the produced amount of ammonia derived from chemical reaction calculated from the amount of samarium iodide used was 0.033 mmol, 0.010 mmol of ammonia was produced through electrochemical reaction.

**Table 2**

| | Cathode part | | | | | Anode part | | | Diaphragm | Cathode potential [V vs SCE] | NH₃ production amount [mmol] |
|---|---|---|---|---|---|---|---|---|---|---|---|
| | Catalyst | Reducing agent | Electrode | Solvent | Additive | Electrode | Solvent | Additive | | | |
| Example 4 | Mo complex (A) (0.010 mmol) | SmI₂ (0.06 mmol) | Ti | DME | DMAB (600 mg) NaI (1600 mg) | Ni | Water | 0.2M KOH | ASE | -1.7 | 0.018 |
| Example 5 | Mo complex (A) (0.007 mmol) | SmI₂ (0.12 mmol) | Ti | DME | DMAB (2900 mg) NaI (1600 mg) | Ni | Water | 0.2M KOH | ASE | -1.7 | 0.047 |

### Example 6

Ammonia was produced in the same manner as Example 1 except that the anion exchange membrane was changed from ASE (manufactured by ASTOM Corporation, product name: "NEOSEPTA ASE-A-5142 membrane," thickness: 150 µm) to AHA (manufactured by ASTOM Corporation, product name: "NEOSEPTA AHA-A-5142 membrane," thickness: 220 µm). The produced amount of ammonia was 0.024 mmol. Since the produced amount of ammonia derived from chemical reaction calculated from the amount of samarium iodide used was 0.009 mmol, 0.015 mmol of ammonia was produced through electrochemical reaction.

### Example 7

Ammonia was produced in the same manner as Example 1 except that the anion exchange membrane was changed from ASE (manufactured by ASTOM Corporation, product name: "NEOSEPTA ASE-A-5142 membrane," thickness: 150 µm) to FAA-3-PK-75 (manufactured by FuMA-Tech GmbH, product name: "Fumasep (registered trademark) FAA-3-PK-75 membrane," thickness: 75 µm). The produced amount of ammonia was 0.027 mmol. Since the produced amount of ammonia derived from chemical reaction calculated from the amount of samarium iodide used was 0.009 mmol, 0.018 mmol of ammonia was produced through electrochemical reaction.

**Table 3**

| | Cathode part | | | | | Anode part | | | Diaphragm | Cathode potential [V vs SCE] | NH₃ production amount [mmol] |
|---|---|---|---|---|---|---|---|---|---|---|---|
| | Catalyst | Reducing agent | Electrode | Solvent | Additive | Electrode | Solvent | Additive | | | |
| Example 6 | Mo complex (A) (0.011 mmol) | SmI₂ (0.06 mmol) | Ti | DME | Bu₄NPF₆ (500 mg) NaI (1600 mg) | Ni | Water | 0.2M KOH | AHA | -1.7 | 0.024 |
| Example 7 | Mo complex (A) (0.011 mmol) | SmI₂ (0.06 mmol) | Ti | DME | Bu₄NPF₆ (500 mg) NaI (1600 mg) | Ni | Water | 0.2M KOH | FAA-3-PK-75 | -1.7 | 0.027 |

### Example 8

An anion exchange membrane (AHA (manufactured by ASTOM Corporation, product name: "NEOSEPTAAHA-A-5142 membrane," thickness: 220 µm) was used as a diaphragm of the cell, a nickel (Ni) electrode was used as an anode electrode, and a titanium (Ti) electrode was used as a cathode electrode.

Into an anode chamber of the H-type cell, were put 40 mL of dehydrated and deoxidized dimethoxyethane (DME), 4 mL of water, and 800 mg of lithium iodide, and 0.008 mmol of the molybdenum complex represented by formula (A) above as a nitrogen-activation catalyst, 0.24 mmol of samarium iodide (SmI₂, with a reduction potential of -0.70 VvsSCE) as a reducing agent, 40 mL of dehydrated and deoxidized dimethoxyethane (DME) as a solvent, and 300 mg of DMAB, 300 mg of lithium iodide, and 1 mL of ionic liquid BMI-TFSA as electric conductivity improving additives were put into a cathode chamber.

Thereafter, a potential of -2.5 V based on a SCE reference electrode was applied to the cathode electrode, followed by energization for two hours to conduct ammonia synthesis reaction. Subsequently, 10 mL of 0.02 mol/L sulfuric acid was added to the cathode chamber to terminate reaction, and produced ammonia was quantified by ion chromatography.

The produced amount of ammonia was 0.143 mmol. Since the produced amount of ammonia derived from chemical reaction calculated from the amount of samarium iodide used was 0.080 mmol, 0.063 mmol of ammonia was produced through electrochemical reaction.

**Table 4**

| | Cathode part | | | | | Anode part | | | Diaphragm | Cathode potential [V vs SCE] | NH₃ production amount [mmol] |
|---|---|---|---|---|---|---|---|---|---|---|---|
| | Catalyst | Reducing agent | Electrode | Solvent | Additive | Electrode | Solvent | Additive | | | |
| Example 8 | Mo complex (A) (0.008 mmol) | SmI₂ (0.24 mmol) | Ti | DME | DMAB (500 mg) Lil (300 mg) BMI-TFSA (1 mL) | Ni | DME | H₂O, LiI | AHA | -2.5 | 0.143 |

Here, the respective abbreviations and compounds shown in Tables 1-4 are as follows. Nitrogen-activation catalyst
Mo complex (A): molybdenum complex (open circuit potential: -0.10 V) represented by formula (A) above
Reducing agent
   SmI₂: samarium iodide (Tokyo Chemical Industry Co., Ltd., reduction potential: -0.70 VvsSCE)
Electrode
   Ti: titanium electrode (manufactured by TAIYO WIRE CLOTH CO., LTD., product name: "fine titanium fiber processed product ST/Ti 0.2 mm")
   Ni: nickel electrode (manufactured by The Nilaco Corporation, product name: "Nickel100 mesh")
Solvent
   DME: dimethoxyethane (manufactured by FUJIFILM Wako Pure Chemical Corporation)
Additive
   KOH: potassium hydroxide (manufactured by FUJIFILM Wako Pure Chemical Corporation)
   Bu₄NPF₆: tetrabutylammonium hexafluorophosphate (manufactured by FUJIFILM Wako Pure Chemical Corporation)
   NaI: sodium iodide (manufactured by FUJIFILM Wako Pure Chemical Corporation)
   DMAB: dimethylanilinium tetrakispentafluorophenylborate
   LiI: lithium iodide (manufactured by FUJIFILM Wako Pure Chemical Corporation)
   BMI-TFSA: 1-butyl-3-methylimidazolium bis(trifluoromethylsulfonyl)amide Diaphragm
   ASE: anion exchange membrane (manufactured by ASTOM Corporation, product name: "NEOSEPTAASE-A-5142," thickness: 150 µm)
   FAA-3-PK-75: anion exchange membrane (manufactured by FuMA-Tech GmbH, product name: "FAA-3-PK-75," thickness: 75 µm)
   AHA: anion exchange membrane (manufactured by ASTOM Corporation, product name: "NEOSEPTAAHA-A-5142," thickness: 220 µm)

From Tables 1-4, it is understood that the produced amounts of ammonia in Examples are larger than the produced amounts of ammonia in Comparative Examples. That is, it is understood that according to the nitrogen-containing compound production apparatus of the present disclosure, the amount of a nitrogen-containing compound produced can be improved.

### Reference Signs List

1: Cathode electrode
2: Anode electrode
3: Diaphragm
4: Cathode chamber
5: Anode chamber
6: Power supply
7: Cathode part
8: Anode part
10: Nitrogen-containing compound production apparatus
11: Cathode electrode
12: Cathode liquid flowing part
13: Cathode current collector
14: Cathode part
15: Anode electrode
16: Anode liquid flowing part
17: Anode current collector
18: Anode part
19: Diaphragm
20: Nitrogen-containing compound production apparatus
21: Power supply

## Claims

1. An apparatus for producing a nitrogen-containing compound, comprising:
a cathode part including a nitrogen-activation catalyst, an organic solvent, a reducing agent, and a cathode electrode;
an anode part including an anode electrode; and
a diaphragm positioned between the cathode part and the anode part, wherein
at least one of the cathode part and the anode part includes a proton source, and
voltage is applied between the cathode electrode and the anode electrode to synthesize a nitrogen-containing compound from nitrogen and protons originating from the proton source in the cathode part.

2. The apparatus for producing a nitrogen-containing compound according to claim 1, wherein the reducing agent includes a compound having a redox potential equal to or negative than a open circuit potential of the nitrogen-activation catalyst and being soluble in the organic solvent.

3. The apparatus for producing a nitrogen-containing compound according to claim 1 or 2, wherein
a reduction potential of the reducing agent is on a more positive side than the proton source or reduction reaction of the protons.

4. The apparatus for producing a nitrogen-containing compound according to any of claims 1 to 3, wherein
the cathode electrode includes at least one selected from the group consisting of titanium, vanadium, manganese, iron, cobalt, nickel, copper, zinc, gallium, niobium, molybdenum, silver, indium, tin, lead, bismuth, aluminum, and carbon.

5. The apparatus for producing a nitrogen-containing compound according to any of claims 1 to 4, wherein
the anode electrode includes at least one selected from rhodium, palladium, iridium, ruthenium, platinum, gold, titanium, nickel, cobalt, manganese, copper, zinc, tin, iron, lanthanum, strontium, chromium, calcium, barium, cerium, bismuth, tungsten, and carbon.

6. The apparatus for producing a nitrogen-containing compound according to any of claims 1 to 5, wherein
the cathode part further includes an electric conductivity improving additive.

7. The apparatus for producing a nitrogen-containing compound according to claim 6, wherein
the electric conductivity improving additive includes at least one selected from the group consisting of a metal halide salt, a compound which is a complex of a cation and an anion, and a basic compound.

8. The apparatus for producing a nitrogen-containing compound according to any of claims 1 to 7, wherein
the diaphragm includes at least one selected from the group consisting of a glass filter, a zeolite membrane, an anion exchange membrane, a cation exchange membrane, and a bipolar membrane.

9. The apparatus for producing a nitrogen-containing compound according to any of claims 1 to 8, wherein
the nitrogen-containing compound includes ammonia.

10. The apparatus for producing a nitrogen-containing compound according to any of claims 1 to 9, operated within ranges of -80°C or more and 100°C or less and 0.10 MPa or more and 0.20 MPa or less.

11. A method for producing a nitrogen-containing compound using the apparatus for producing a nitrogen-containing compound according to any of claims 1 to 10, the method comprising:
a step of applying voltage between the cathode electrode and the anode electrode to synthesize a nitrogen-containing compound from nitrogen and protons originating from the proton source in the cathode part.
